# FASCICULE DE BREVET EUROPEEN

(11) **EP 1 580 877 B1**
(45) Date de publication et mention de la délivrance du brevet: **26.04.2017**
(21) Numéro de dépôt: 05300158.2
(22) Date de dépôt: 01.03.2005
(51) Int. Cl.: H02P 3/12

(54) **Appareil électroménager incluant un moteur électrique**
Elektrisches Haushaltsgerät mit einem Elektromotor
Electric household appliance with an electric motor

(30) Priorité: 03.03.2004 FR 0450435
(43) Date de publication de la demande: 28.09.2005
(73) Titulaire: SEB S.A., 69130 Ecully (FR)
(72) Inventeur: Herrada, José, 38200, Vienne (FR); Guinet, Michel, 64000, Pau (FR)
(74) Mandataire: Cabinet Laurent & Charras

(56) Documents cités:
- US-A- 5 644 112

## Description

### Domaine Technique

L'invention se rattache au secteur de l'électroménager et plus particulièrement au petit électroménager, utilisé dans le domaine de la préparation culinaire. Elle vise plus spécifiquement un agencement du circuit électrique de commande, destiné à assurer un freinage rapide du moteur. Elle trouve donc une application toute particulière mais non exclusive pour les robots culinaires de préparation d'aliments.

### Techniques antérieures

De façon générale, les normes applicables aux robots culinaires incluant des outils tranchants, imposent un arrêt mécanique du moteur dans un temps relativement court, de l'ordre d'une à deux secondes après que l'utilisateur ait fait une manoeuvre rendant ces outils accessibles. Le circuit électrique de commande du moteur est donc généralement agencé pour provoquer l'arrêt du moteur dès que le bol ou le couvercle sont déplacés. Un exemple de ce type de dispositif est décrit dans le document US 5 644 112.

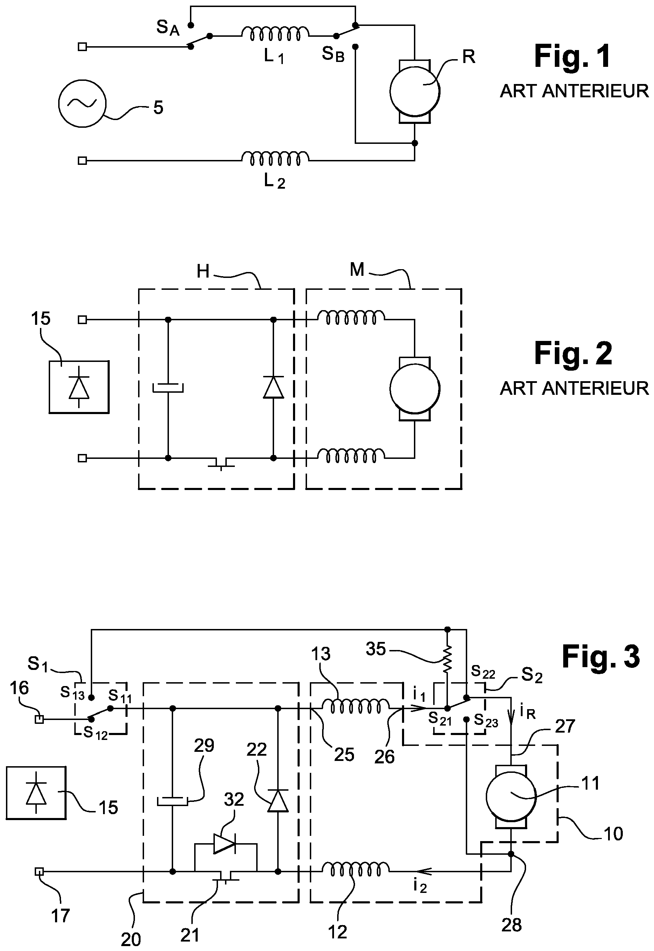

Ainsi, on connaît la solution illustrée à la figure 1 qui consiste à équiper le circuit électrique de commutateurs, ou "switch" (S_{A}, S_{B}), permettant d'inverser la position relative de l'un ou l'autre des bobinages du moteur par rapport au rotor, transformant ainsi le moteur en générateur. Plus précisément, lorsque l'on ouvre le bol en déplaçant le couvercle, les deux commutateurs (S_{A}, S_{B}) sont automatiquement basculés, de sorte que le bobinage L₁ se retrouve non plus connecté avec la borne supérieure du rotor R, mais avec la borne inférieure. L'énergie inductive emmagasinée dans le bobinage L₁ provoque donc le passage du courant dans le rotor R dans un sens opposé à celui qu'il était juste avant le basculement des commutateurs. Comme le moteur fonctionne alors en mode générateur, les courants augmentent à cause du court-circuit augmentant l'effort de freinage. Ainsi l'énergie mécanique des éléments tournants est transformée rapidement en énergie électrique dissipée dans les bobinages moteur. Cela provoque donc l'arrêt plus rapide du moteur. Cette solution donne satisfaction lorsque le moteur est alimenté en courant alternatif à partir du secteur (5).

En effet, les courants circulant dans les bobinages du moteur sont alternatifs et peuvent être aisément coupés par des commutateurs classiques possédant un pouvoir de coupure approprié.

On connaît par ailleurs, des solutions de commande de moteur électrique employées dans certains appareils nécessitant un réglage de la vitesse. Pour ce faire, et comme illustré à la figure 2, le moteur (M) est alimenté en courant continu par un circuit électrique comportant un montage hacheur (H), lui-même alimenté par une source de tension continue (15). Par courant continu, on entend un courant dont la valeur moyenne n'est pas nulle, et qui peut être unidirectionnel, c'est à dire de polarité constante. Cette source de tension continue peut être un pont redresseur, dont la tension de sortie est lissée par la présence d'un condensateur disposé en parallèle de la charge, ou une source de tension constante du type batterie.

La solution employée pour le freinage des moteurs alimentés en courant alternatif, comme illustré à la figure 1, n'est pas transposable aux variantes alimentant le moteur en courant continu, comme illustré à la figure 2. En effet, dans l'hypothèse où la source de tension alternative (5) de la figure 1 serait remplacée par la sortie du montage hacheur (H) de la figure 2, on observerait des dégradations rapides des contacts des commutateurs, mais surtout des phénomènes de collage de ces contacts du fait du passage d'un courant continu.

Les phénomènes de collage non seulement dégradent voire détruisent les commutateurs, mais également maintiennent le moteur alimenté et ne permettent donc pas son arrêt alors que celui-ci est souhaité. On conçoit que ce défaut est rédhibitoire, pour des questions de sécurité des utilisateurs.

Le problème que se propose donc de résoudre l'invention est d'obtenir, pour un circuit d'alimentation du moteur en courant continu, des performances similaires à celles observées avec les schémas d'alimentation des moteurs alternatifs. Un autre objectif est d'obtenir ce résultat avec des composants, et notamment des commutateurs, similaires à ceux également utilisés pour les solutions à courant alternatif, et ce pour éviter des surcoûts importants.

### Exposé de l'invention

L'invention concerne donc un appareil électroménager qui inclut un moteur électrique universel, alimenté en courant continu. Cette alimentation se fait par un circuit électrique relié à une source de tension électrique continue. Ce circuit comporte un montage hacheur, incluant un condensateur disposé en parallèle de la source de tension continue, et un ou plusieurs interrupteurs statiques.

Conformément à l'invention, ce circuit électrique comporte également deux commutateurs commandables, permettant la reconfiguration automatique du circuit. Un premier commutateur est connecté d'une part à une première borne d'un bobinage du moteur, et d'autre part, alternativement, à la source de tension continue et à la première borne du rotor du moteur. Un second commutateur est connecté d'une part, à la seconde borne du même bobinage du moteur, et d'autre part, alternativement, à l'une ou l'autre des bornes du rotor du moteur.

Autrement dit, l'invention consiste à équiper le circuit d'alimentation du moteur de différents commutateurs qui permettent de relier un des bobinages du moteur dans un sens opposé à celui dans lequel il est en mode normal. Cette reconfiguration est possible car la surtension qui se produit aux bornes du moteur lors d'une coupure du courant sur charge inductive est limitée, grâce à la présence du condensateur de filtrage à l'entrée du hacheur. En effet, lors de la déconnexion du bobinage du moteur par rapport à la source d'alimentation électrique, le condensateur de filtrage se décharge à travers le bobinage du moteur, limitant donc la variation de tension sur le commutateur. Il est donc possible d'utiliser des commutateurs classiques, possédant des pouvoirs de coupure similaires à ceux employés par les solutions alimentant le moteur en courant alternatif.

En pratique, il est préférable que les moyens de commande du basculement des commutateurs permettent un basculement décalé de ces deux commutateurs. En provoquant ainsi l'ouverture du second commutateur, connecté au rotor du moteur alors que le premier commutateur relié au condensateur a déjà basculé, on s'assure que le condensateur joue donc son effet de compensation caractéristique.

Ce décalage peut s'obtenir de différentes manières, et notamment par une disposition électrique, mais également mécanique décalée dans l'espace des deux leviers provoquant l'ouverture des commutateurs. Ce décalage est adapté en fonction de l'architecture de l'appareil, et de la configuration des parties permettant l'accès aux outils tranchants.

Dans le cas toutefois où l'on souhaite se prémunir d'une ouverture simultanée des deux commutateurs, par exemple en utilisant des commutateurs électriques de type relais, on peut prévoir la présence d'une résistance électrique, reliant la seconde borne du bobinage du moteur de la première borne du rotor du moteur. Cette résistance, qui est court-circuitée par le commutateur en mode normal, se retrouve mis en parallèle avec le bobinage et le rotor dans le cas d'une ouverture simultanée. La valeur de cette résistance est choisie suffisamment grande pour ne pas dégrader le freinage et assez faible pour diminuer l'arc au moment de l'ouverture du commutateur.

### Description sommaire des figures

La manière de réaliser l'invention, ainsi que les avantages qui en découlent ressortiront bien de la description du mode de réalisation qui suit, à l'appui des figures annexées dans lesquelles :
Les figures 1 et 2 sont des schémas électriques illustrant la manière dont le moteur est alimenté dans les solutions de l'art antérieur.
La figure 3 est un schéma électrique analogue, illustrant la solution de l'invention.

### Manière détaillée de réaliser l'invention

Comme déjà évoqué, l'invention présente une solution permettant d'assurer le freinage rapide d'un moteur d'appareil de préparation culinaire, qui est compatible avec l'emploi d'un réglage de vitesse au moyen de commande du type hacheur. Cette solution permet d'employer des composants analogues à ceux employés sur des solutions à vitesse fixe ou variables disposant d'un commutateur bidirectionnelle de type TRIAC ou analogue, dans lequel le moteur est alimenté en courant alternatif.

Plus précisément, et comme illustré à la figure 3, le moteur (10) comporte un rotor (11) et deux bobinages statoriques (12, 13). Ce moteur (10) est alimenté, à partir d'une source de tension continue (15) qui peut par exemple être obtenue à partir du redressement de la tension alternative du réseau, ou de façon plus générale de n'importe quelle autre source de tension. Cette source de tension (15) continue peut englober ou non un condensateur de lissage.

La variation de la vitesse du moteur peut être obtenue en utilisant un montage hacheur (20). Ce montage hacheur (20) comporte comme illustré à la figure 3 un interrupteur statique (21), qui dans la forme illustrée est représenté comme un IGBT, mais qui bien entendu peut être réalisé de multiples manières sans sortir du cadre de l'invention. Le montage hacheur (20) comporte également une diode de roue libre (22) parcourue par le courant circulant dans le moteur lorsque l'interrupteur statique (21) est ouvert.

Pendant les périodes où l'interrupteur statique est passant, le hacheur (20) permet donc d'appliquer une tension correspondant à celle présente au niveau du condensateur de filtrage situé en entrée du hacheur.

Conformément à l'invention, le montage électrique comporte deux commutateurs (S₁, S₂) commandés mécaniquement. D'un point de vue électrique, le premier de ces commutateurs (S₁)comporte une borne (S₁₁) reliée dans la forme illustrée à la borne (25) du bobinage supérieur (13) du moteur. La seconde borne (S₁₂) du commutateur (S₁) est reliée en fonctionnement normal à la sorti (16) de la source de tension continue (15). La troisième borne (S₁₃) du commutateur (S₁) est reliée à la première borne (S₁₁) en cas de commande de freinage.

Le second commutateur (S₂) présente sa première borne (S₂₁) qui est reliée à la seconde borne (26) du bobinage du moteur. Le contact du second commutateur (S₂) peut se déplacer entre deux bornes (S₂₂, S₂₃) reliées chacune à une borne (27, 28) du rotor du moteur. La borne (S₂₂) du second commutateur (S₂) est reliée à la borne supérieure (27) du rotor en fonctionnement normal, et reliée à la borne (S₁₃) du premier commutateur (S₁), utilisé en cas de freinage.

Généralement, les deux commutateurs (S₁, S₂) sont commandés mécaniquement lorsqu'un freinage du moteur est imposé par les exigences de sécurité. Ainsi, lors de l'ouverture du bol du robot culinaire, le mouvement mécanique correspondant, qui peut être le pivotement du couvercle, provoque le basculement des commutateurs de la position de repos, tel qu'illustré à la figure 3, dans la position inverse. Bien entendu, cette commande mécanique des commutateurs peut se faire différemment, selon l'architecture du robot, et la manoeuvre conduisant à rendre accessible les outils tranchants. Par exemple, il est possible d'utiliser des commutateurs électriques type relais, en employant un ou deux contacts.

Dans la forme illustrée, et donc en mode normal, le même courant (i₁ = i_{R} = i₂) circule dans les bobinages (13, 12) et le rotor (11), en fonction de la commande du hacheur.

Dès lors qu'il s'avère nécessaire d'assurer le freinage du moteur, le premier commutateur (S₁) bascule, assurant donc la coupure d'alimentation depuis la source de tension continue (15). Dans ce cas, le courant (i₁) circulant dans le bobinage supérieur (13) est entretenu par la décharge du condensateur de filtrage (29) limitant donc la variation de courant à l'intérieur de la bobine (13), et donc la tension à ses bornes, et par conséquent la surtension créée sur le commutateur. De façon préférée, le basculement du second commutateur (S₂) se fait de façon légèrement décalée, de sorte que quelques millisecondes plus tard, la seconde borne (26) du bobinage (13) se trouve connectée à la borne inférieure (28) du rotor. Dans ce cas, les courants circulants dans le bobinage (13) et dans le rotor sont inversés (i₁ = - i_{R}) de sorte de créer un effort contraire au mouvement, le moteur fonctionnant alors en génératrice, avec pour conséquence un freinage des parties tournantes.

Dans la forme illustrée à la figure 3, le montage comporte également une diode (32) montée en antiparallèle de l'interrupteur statique (21), et ce pour éviter que la tension aux bornes du condensateur (29) ne devienne trop négative. Lorsque le condensateur (29) se décharge dans le bobinage supérieur (13), cette tension reste donc supérieure à au moins deux fois la tension au seuil des diodes, soit environ - 1,2 volts.

Cela permet donc d'utiliser un condensateur polarisé en tant que condensateur de filtrage. La présence de la diode (32) en antiparallèle de l'interrupteur statique (i₁) permet également de protéger ce dernier contre les éventuelles tensions négatives. On notera que cette diode antiparallèle peut être disposée en complément d'un schéma existant, ou bien encore être intégrée dans l'interrupteur statique lui-même.

Dans la forme illustrée à la figure 3, le montage comporte également une résistance (35) interposée entre la seconde borne (26) du bobinage (13) du moteur, et la première borne (27) du moteur. Cette résistance (35) présente une valeur pouvant aller de quelques Ohms à quelques dizaines d'Ohms. En mode de fonctionnement normal, cette résistance est shuntée par le contact du commutateur S₂, entre les bornes S₂₂ et S₂₁. Lorsque les deux commutateurs S1 et S2 s'ouvrent simultanément, cette résistance se trouve transistoirement en parallèle avec le bobinage (13,12) et le rotor (11). Cette résistance provoque donc une diminution du courant circulant dans le moteur, et une diminution de l'arc au moment de l'ouverture des commutateurs.

Il ressort de ce qui précède que le montage conforme à l'invention permet d'assurer un freinage rapide du moteur dans le cas où les exigences de sécurité l'imposent, avec un schéma intégrant un montage hacheur, et ce avec des composants similaires à ceux utilisés pour les commandes alternatives directes.

### Applications industrielles

La présente invention présente des applications toutes particulières dans le domaine des robots culinaires assurant le mouvement d'un outil tranchant ou blessant, mais également dans les domaines des blenders, des hachoirs et minihachoirs, des centrifugeuses...

## Revendications

1. Appareil électroménager, incluant un moteur électrique universel (10), et un circuit électrique, ledit moteur étant alimenté en courant continu par ledit circuit électrique lui-même relié à une source de tension continue (15), ledit circuit comportant un montage hacheur (20), incluant un condensateur (29) en parallèle sur la source de tension continue (15), et un ou plusieurs interrupteurs statiques (21, 22), **caractérisé en ce que** le circuit comporte également deux commutateurs (S₁, S₂) commandables, permettant la reconfiguration automatique dudit circuit, à savoir :
▪ un premier commutateur (S₁), connecté d'une part (S₁₁), à une première borne (25) d'un bobinage (13) du moteur, et d'autre part, alternativement (S₁₂) à la source de tension continue (15) et (S₁₃) à la première borne (27) du rotor (11) du moteur ;
▪ un second commutateur (S₂), connecté d'une part (S₂₁), à la seconde borne (26) dudit bobinage (13) du moteur, et d'autre part, alternativement (S₂₂) à l'une (27) ou (S₂₃) à l'autre des bornes (27, 28) du rotor (11) du moteur.

2. Appareil selon la revendication 1, **caractérisé en ce qu'**il comporte des moyens pour commander mécaniquement le basculement des commutateurs (S₁, S₂) sous l'effet d'une action de l'utilisateur sur une partie de l'appareil.

3. Appareil selon la revendication 1, **caractérisé en ce que** les moyens de commande de basculement des commutateurs (S₁, S₂) permettent un basculement décalé dans le temps des deux commutateurs (S₁, S₂).

4. Appareil selon la revendication 1, **caractérisé en ce qu'**il comporte une résistance électrique (35) reliant la seconde borne (26) du bobinage (13) du moteur et à la première borne (27) du moteur.

5. Appareil selon la revendication 1, **caractérisé en ce que** les commutateurs (S₁, S₂) sont des relais électriques incluant un ou plusieurs contacts.

## Patentansprüche

1. Elektrisches Haushaltsgerät mit einem Universalelektromotor (10) und einem Schaltkreis, wobei dieser Motor über diesen elektrischen Schaltkreis mit Gleichstrom versorgt wird, der selbst mit einer Gleichspannungsquelle (15) verbunden ist, wobei dieser Schaltkreis eine Zerkleinereranordnung (20) enthält, die einen Kondensator (29) umfasst, parallel zur Gleichspannungsquelle (15), und einen oder mehrere statische Schalter (21, 22), **dadurch gekennzeichnet, dass** der Schaltkreis auch zwei steuerbare Schalter (S₁, S₂) enthält, die die automatische Rekonfiguration dieses Schaltkreises ermöglichen, und zwar:
▪ ein erster Schalter (S₁), verbunden einerseits (S₁₁) mit einer ersten Klemme (25) einer Motorwicklung (13), und andererseits abwechselnd (S₁₂) mit der Gleichspannungsquelle (15) und (S₁₃) dem ersten Anschluß (27) des Rotors (11) des Motors;
▪ ein zweiter Schalter (S₂), verbunden einerseits (S₂₁) mit der zweiten Klemme (26) dieser Motorwicklung (13) und andererseits abwechselnd (S₂₂) mit der einen (27) oder (S₂₃) der anderen Anschlußklemme (27, 28) des Rotors (11) des Motors.

2. Gerät gemäß Anspruch 1 **dadurch gekennzeichnet, dass** es Mittel enthält, um mechanisch das Kippen der Schalter (S₁, S₂) unter der Einwirkung einer Handlung des Benutzers bei einem Teil des Gerätes zu steuern.

3. Gerät gemäß Anspruch 1 **dadurch gekennzeichnet, dass** die Mittel zur Steuerung des Kippens der Schalter (S₁, S₂) ein zeitlich versetztes Kippen der beiden Schalter (S₁, S₂) erlauben.

4. Gerät gemäß Anspruch 1 **dadurch gekennzeichnet, dass** es einen elektrischen Widerstand (35) enthält, der die zweite Klemme (26) der Motorwicklung (13) mit der ersten Klemme (27) des Motors verbindet.

5. Gerät gemäß Anspruch 1 **dadurch gekennzeichnet, dass** die Schalter (S₁, S₂) elektrische Relais mit einem oder mehreren Kontakten sind.

## Claims

1. A domestic electrical appliance, including a universal electric motor (10) and an electrical circuit, said electric motor being powered by direct current via said electrical circuit linked to a DC electrical voltage source (15), said circuit including a chopper arrangement (20), including a capacitor (29) connected in parallel with the DC voltage source (15), and one or more solid-state switches (21, 22), **characterized in that** the circuit also includes two controllable switches (S₁, S₂), for automatically reconfiguring said circuit:
• a first switch (S₁), connected on the one hand (S₁₁) to a first terminal (25) of a motor winding (13), and on the other hand, alternately (S₁₂) to the DC voltage source (15) and (S₁₃) to the first terminal (27) of the motor rotor (11);
• a second switch (S₂), connected on the one hand (S₂₁) to the second terminal (26) of said motor winding (13), and on the other hand, alternately (S₂₂) to one (27) or (S₂₃) the other of the terminals (27, 28) of the motor rotor (11).

2. The appliance as claimed in claim 1, which includes means for mechanically controlling the switching over of the switches (S₁, S₂) under the effect of an action by the user on a part of the appliance.

3. The appliance as claimed in claim 1, **characterized in that** the means of controlling the switching over of the switches (S₁, S₂) provide for a switchover of the two switches (S₁, S₂) staggered in time.

4. The appliance as claimed in claim 1, which includes an electrical resistor (35) linking the second terminal (26) of the motor winding (13) to the first terminal (27) of the motor.

5. The appliance as claimed in claim 1, **characterized in that** the switches (S₁, S₂) are electrical relays including one or more contacts.
